# EUROPEAN PATENT SPECIFICATION

(11) **EP 4 524 779 B1**
(45) Date of publication and mention of the grant of the patent: **18.11.2026**
(21) Application number: 23382924.1
(22) Date of filing: 12.09.2023
(51) Int. Cl.: G06F 18/00, G06N 3/08

(54) **PROVIDING CONFIDENCE INFORMATION ASSOCIATED WITH DETECTED STATE TRANSITIONS FOR DYNAMIC SYSTEMS**
BEREITSTELLUNG VON KONFIDENZINFORMATIONEN IM ZUSAMMENHANG MIT ERKANNTEN ZUSTANDSÜBERGÄNGEN FÜR DYNAMISCHE SYSTEME
FOURNITURE D'INFORMATIONS DE CONFIANCE ASSOCIÉES À DES TRANSITIONS D'ÉTAT DÉTECTÉES POUR DES SYSTÈMES DYNAMIQUES

(43) Date of publication of application: 19.03.2025
(73) Proprietor: The Boeing Company, Arlington, VA 22202 (US)
(72) Inventor: DREWS, Robin Christian, 63263 NEU-ISENBURG (DE); GÜEMES JIMENEZ, Alejandro, 28042 MADRID (ES); ZORICIC, Marko, 63263 NEU-ISENBURG (DE)
(74) Representative: ZBM Patents - Zea, Barlocci & Markvardsen

(56) References cited:
- EP-A1- 4 235 625
- US-A1- 2021 195 265
- US-A1- 2022 161 782
- US-A1- 2023 177 364

## Description

### FIELD OF THE DISCLOSURE

The present disclosure is generally related to providing confidence information associated with detected state transitions for dynamic systems.

### BACKGROUND

Systems (e.g., natural systems and manmade systems) that change over time are dynamic systems. Some dynamic systems have a great deal of complexity due to characteristics of processes of the dynamic systems and due to a wide parameter space for the processes of the dynamic systems. To simplify modeling dynamic systems, the dynamic systems can be described by a set of cluster states (states), where each state has a limited parameter space, and a separate model can be used for each state. For example, for a dynamic system of aircraft flights, flight phases of initial climb, cruise, and descent can be used as states to form a simple description of a flight of an aircraft with the parameter spaces including altitude and speed, and simple models can be developed that describe aircraft behavior for each flight phase. Additional flight phases (e.g., taxi out, take off, enroute climb, enroute descent, approach, landing, taxi in, etc.) can be defined as states to form a more complete and useful description of the flight of the aircraft.

When states are used to describe a dynamic system, data for the dynamic system is typically analyzed to determine which state describes the dynamic system at a particular time. Unsupervised techniques can be used to infer the state of a dynamic system at a particular time. When an unsupervised technique is used, known states of the dynamic system for particular conditions are needed to quantify accuracy of a transition state model used to determine the state of the dynamic system. Characterizing the accuracy of a state of a dynamic system can be a laborious and complex task that often cannot be completed in an amount of time where a determined state is useful. A manual curating process in which an experienced user manually processes a given set of states and compares them with output of a transition state model can be used to quantify accuracy of the transition state model, but the manual curating process requires a significant amount of time to generate a target dataset and is dependent on the size of the target dataset. It is desirable to have an unsupervised technique to assess the accuracy of transitions between states of a dynamic system that is able to provide, in a useful time frame, an indication that a determined state identified by a transition state model accurately reflects a current state of the dynamic system. Document US2021/195265 is entitled "Methods and apparatus for watermark outage detection" and discloses, in par. 0120, a system comprising one or more processors; and a memory comprising instructions executable by the one or more processors to, in par. 0101, obtain first input from a transition state model, wherein the first input indicates a first state of a dynamic system; obtain second input from the transition state model, wherein the second input indicates a state transition from the first state to a second state and, in par. 0074, to retrieve a transition confidence metric associated with the state transition. Document US2022161782 entitled "Method of determining an allowable vehicle state space for an articulated vehicle" discloses providing a determined allowable vehicle state space as an output to a control unit.

### SUMMARY

A system as described in claim 1 includes one or more processors and a memory. The memory includes instructions executable by the one or more processors. The instructions are executable by the one or more processors to obtain first output from a transition state model. The first output indicates a first state of a dynamic system. The instructions are executable by the one or more processors to obtain second output from the transition state model. The second output indicates a state transition from the first state to a second state. The instructions are executable by the one or more processors to retrieve a transition confidence metric associated with the state transition from the first state to the second state from a transition confidence matrix. The instructions are also executable by the one or more processors to provide the second state as output when the transition confidence metric indicates that the state transition is valid. The dynamic system corresponds to aircraft flights. The first state and the second state include taxi in, take off, initial climb, enroute climb, cruise, enroute descent, descent, approach, landing, and taxi in.

In another particular implementation, a method includes obtaining, at a first device, first output from a transition state model for a dynamic system. The first output indicates a first state of the dynamic system. The method includes obtaining, at the first device, second output from the transition state model. The second output indicates a state transition from the first state to a second state. The method includes retrieving, at the first device, a transition confidence metric associated with the state transition from the first state to the second state from a transition confidence matrix. The method also includes providing, via the first device, the second state as output in response to the transition confidence metric indicating that the state transition is valid.

In another particular implementation, a non-transitory computer-readable medium stores instructions that are executable by one or more processors to obtain first output from a transition state model for a dynamic system. The first output indicates a first state of the dynamic system. The instructions are executable by one or more processors to obtain second output from the transition state model. The second output indicates a state transition from the first state to a second state. The instructions are executable by one or more processors to retrieve a transition confidence metric associated with the state transition from the first state to the second state from a transition confidence matrix. The instructions are also executable by one or more processors to provide the second state as output in response to the transition confidence metric indicating that the state transition is valid.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 is a block diagram of a system to provide confidence information associated with state transitions for a dynamic system.
FIG. 2 is a diagram depicting an example of a matrix used to provide confidence information associated with state transitions for a particular dynamic system.
FIG. 3 is a diagram depicting an example of a transition matrix for the particular dynamic system that indicates expected state transitions for the particular dynamic system.
FIG. 4 is a diagram depicting a first transition confidence matrix based on the matrix of FIG. 2.
FIG. 5 is a diagram depicting a second transition confidence matrix based on the matrix of FIG. 2.
FIG. 6A is a flow chart of a first portion of a method of generating a transition confidence matrix that provides confidence information associated with detected state transitions for a dynamic system.
FIG. 6B is flow chart of a second portion of the method of generating the transition confidence matrix that provides confidence information associated with detected state transitions for the dynamic system.
FIG. 7 is a flow chart of a method of use of a transition confidence matrix to provide confidence information associated with detected state transitions for a dynamic system.
FIG. 8 is a block diagram of a computing environment including a computing device configured to provide confidence information associated with detected state transition for dynamic systems.

### DETAILED DESCRIPTION

Aspects disclosed herein present systems and methods for providing confidence information associated with detected state transitions for a dynamic system. The dynamic system can be any dynamic system that changes with time, is characterized by a plurality of states, and is associated with a transition state model. The dynamic system corresponds to aircraft flights. Other examples of dynamic systems may correspond to turbulent fluid flow systems, to batch chemical reaction systems, etc. In this disclosure, aircraft flights are predominantly used in the examples as a dynamic system, though the description applies to other dynamic systems as well.

The transition state model for a dynamic system is used by a device (e.g., a computer system) to determine a state of the dynamic system based on data associated with the dynamic system and provides output usable by the device or another device. For example, the transition state model for aircraft flights generates output based on Automatic Dependent Surveillance - Broadcast (ADS-B) data to indicate a state of each of the aircraft flights at a particular time. The states include taxi in, take off, initial climb, enroute climb, cruise, enroute descent, descent, approach, landing, and taxi in. The state output by the transition state model is determined independent of a previously output state determined by the transition state model.

When the transition state model is reliable (e.g., is determined to be sufficiently accurate to be relied on to provide meaningful output), the output produced by the transition state model can be used by the device or another device to provide information about aircraft flights to the public, can be used by air traffic control systems and personnel to monitor and control aircraft in an airspace region associated with an airport, etc. Meaningful output corresponds to actual states of aircraft without a significant portion of the output corresponding to states that are not possible based on a previous state. For example, if the output of the transition state model for an aircraft flight indicates that the state is taxi in, the output is meaningful if the previous state was landing, and the output is not meaningful if the previous state was a state other than landing. If the previous state was landing, the output can be used to provide an estimate of an arrival of the aircraft at a gate. Instead, if the previous state was not landing, use of the "taxi in" output to provide an estimate of the arrival of the aircraft at the gate could provide an unrealistic arrival time and could cause problems for one or more people that rely on the estimate.

Providing confidence metrics associated with the output of the transition state model makes the output of the transition state model more useful. The confidence metrics are provided as a transition confidence matrix of validity of transitions from a first state to a second state indicated by the transition state model. The confidence metrics do not address a likelihood that a particular transition identified by the transition state model occurred but rather provide information as to whether the particular transition is a valid transition of the dynamic system. For example, for some dynamic systems a particular transition from a first particular state is unlikely to occur (e.g., a 0.1 % or less chance of occurring) but such transitions are known to occasionally occur. The entry for the particular transition in the transition confidence matrix is a nonzero value (i.e., a value corresponding to the percentage or a logical value of 1) to indicate that the particular transition can occur and that an occurrence of such a transition can be valid. Thus, an identified state transition that is unlikely to occur, but is still possible, is not automatically identified as an invalid transition because it is unlikely to occur.

The transition confidence matrix is generated based on an analysis of historical data for the dynamic system for a first particular time period and the matrix can be updated at particular intervals (e.g., daily, weekly, monthly, seasonally, or at some other time interval). The first particular time period corresponds to a time period (e.g., one or more days, one or more weeks, one or more months, one or more years, a season based on data from one or more previous years, or some other time period) that is useful in association with the particular dynamic system. The transition confidence matrix can include columns representing the present state of the dynamic system and rows representing a previous state of the dynamic system. In some implementations, the entries in the transition confidence matrix correspond to percentages (or fractions) of occurrences of transitions from the state indicated by the row to the state indicated by the column, and the sum of the values in a row add to 100, or near to 100 due to rounding errors, when the matrix presents percentages.

In some implementations, the transition confidence matrix is modified to set statistically insignificant entries (e.g., entries with values less corresponding to less than 1%, 0.1%, 0.01% or some other threshold) to zero. Also, some entries of the matrix associated with transitions that are known not to occur are set to zero. For example, for aircraft flights, a row of the matrix can correspond to a taxi in state. The taxi in state is a last state for each flight and there is no transition to another state during taxi in. When the matrix based on historical data includes entries for the taxi in state corresponding to transitions to other states, such entries can be set to zero since such transitions do not occur.

In some implementations, the transition confidence matrix is used with entries presented as percentages or fractions (e.g., numerical values). In some implementations, the transition confidence matrix is transformed to a transition confidence matrix of ones and zeros (e.g., logical values) to simplify the transition confidence matrix. In an example, entries of the matrix that are zero remain zero, entries with values less than a threshold value are set to zero, and remaining entries are assigned values of one. According to some aspects, entries that are known to have a possibility of occurring, even if the computed value of the entry based on historical data is below the threshold value, are also assigned values of one.

In some implementations, a transition confidence monitor is used by a device to determine confidence of transitions indicated by the transition state model using the transition confidence matrix. The transition confidence monitor uses the transition confidence matrix to assess validity of a transition to a second state indicated by the transition state model and to generate an output. In an example, when a confidence metric from the transition confidence matrix is a nonzero value, the output of the transition confidence monitor includes the second state. The device, or another device, can use the second state (e.g., a current state of the dynamic system) as information about the dynamic system or as a parameter to determine other information about the dynamic system. In another example, when the confidence metric from the transition confidence matrix for the transition indicated by the transition state model is zero, the transition confidence monitor does not output the second state. In some implementations, the transition confidence monitor monitors a passage of time after the state transition when the confidence metric indicates the state transition is invalid, and the transition confidence monitor provides the second state as output if the transition confidence monitor does not receive input from the transition state model indicating another state transition before passage of a threshold time (e.g., 1 second, 5 seconds, 10 seconds, or some other span of time) is exceeded.

The output of the second state by the transition confidence monitor can be used by the device or another device that uses the output from the transition confidence monitor to determine how to utilize the information that the dynamic system transitioned to the second state. The output is used by a control system to control an instance of the dynamic system. In some examples, the output can be used by a notification system that provides information indicating a state of the dynamic system, by other types of systems that use the state of the dynamic system as input, or combinations thereof.

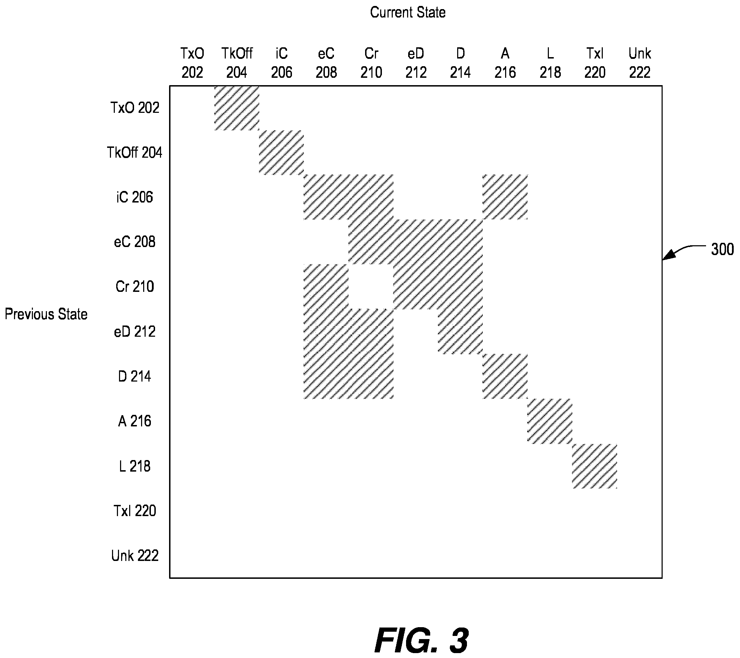

The confidence metrics of the transition confidence matrix can also be used as a basis to revise the transition state model. For example, for an aircraft flight system, there should be few or no transitions from cruise to initial climb, as indicated in the expected transitions depicted in FIG. 3. If the confidence metric for the transition from cruise to initial climb based on analysis of historical data for aircraft flights indicates that the transition from cruise to initial climb occurs somewhat frequently (e.g., occurs over 5% of the time for all transitions from cruise to another state), information can be provided to an entity associated with the transition state model to request that parameters used by the transition state model to determine that an aircraft state is in the initial climb state, the cruise state, or both, be modified to reduce or eliminate the occurrences that indicate a transition from cruise to initial climb.

Most dynamic systems that are monitored generate large volumes of data. The amount of historical data that needs to be analyzed to enable quantification of confidence metrics makes human determination of such confidence metrics impractical. A technical advantage of the present disclosure is that one or more computer systems can analyze historical data for a dynamic system to generate a matrix of confidence metrics for the dynamic system when state transitions for the dynamic system are determinable by a transition state model of the dynamic system. The matrix can be used by the computer system or by other computer systems that receive the matrix to provide output associated with the confidence of transitions detected by the transition state model.

The figures and the following description illustrate specific exemplary implementations. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

Particular implementations are described herein with reference to the drawings. In the description, common features are designated by common reference numbers throughout the drawings.

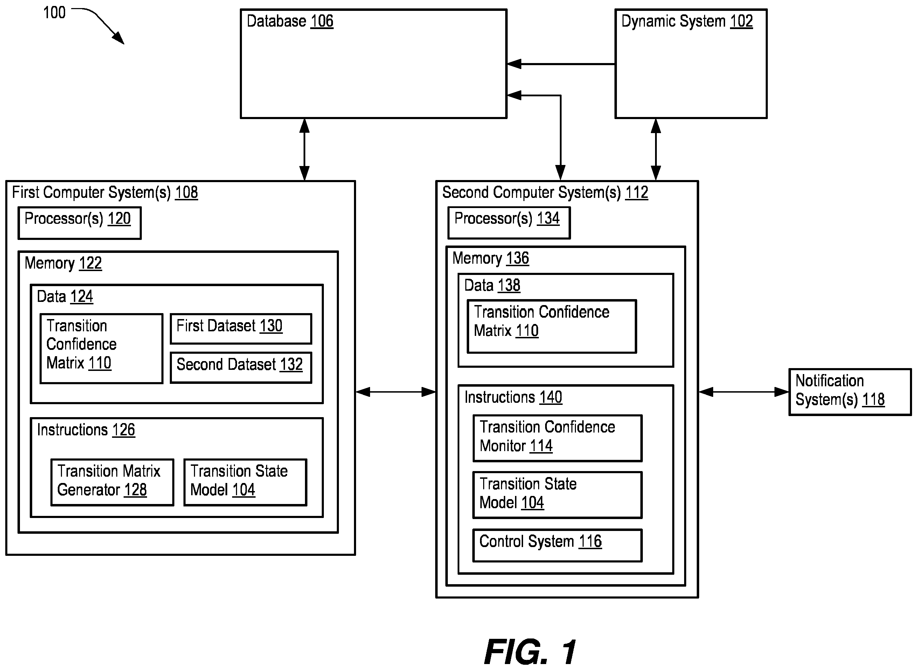

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts a first computer system 108 including one or more processors ("processor(s)" 120 in FIG. 1), which indicates that in some implementations the first computer system 108 includes a single processor 120 and in other implementations the first computer system 108 includes multiple processors 120. For ease of reference herein, such features are generally introduced as "one or more" features and are subsequently referred to in the singular or optional plural (as indicated by "(s)") unless aspects related to multiple of the features are being described.

The term "phase" is used interchangeably with the term "state." The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements. As used herein, A "and/or" B may mean that either "A and B," or "A or B," or both "A and B" and "A or B" are applicable or acceptable.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 depicts a block diagram of a system 100 configured to provide confidence information associated with state transitions for a dynamic system 102. The state transitions are determined by a transition state model 104. The dynamic system 102 may be any dynamic system 102 where the transition state model 104 for the dynamic system 102 detects transitions between states of the dynamic system 102 based on data associated with the dynamic system 102. For example, in some implementations, the dynamic system 102 includes aircraft flights and the transition state model 104 uses a Phases of Flight processor developed by Aviation Insights, LLC (Chevy Chase, Maryland). The Phases of Flight processor infers, in real-time, a flight phase of a given flight based on Automatic Dependent Surveillance - Broadcast (ADS-B) data using a fuzzy logic methodology. The flight phases are based on particular clusters of interest. In a particular implementation, the flight phases include taxi out, take off, initial climb, enroute climb, cruise, enroute descent, descent, approach, landing, and taxi in. In other implementations the flight phases can include fewer flight phases, or one or more additional flight phases.

The system 100 includes the dynamic system 102, a database 106 that stores the data associated with the dynamic system 102, one or more first computer systems 108 configured to determine a transition confidence matrix 110 based on analysis of a historical set of transition data determined using the transition state model 104 on a set of historical data from the database 106, and one or more second computer systems 112 configured to use a transition confidence monitor 114 to validate transitions between states determined by the transition state model 104 based on analysis of real-time data, or near real-time data, from the database 106 or from one or more instances of the dynamic system 102. The second computer system 112 is configured to output data based on detected transition confidence metric values associated with the detected transitions. The second computer system 112 may include, or provide output to, one or more control systems 116 for the dynamic system 102, one or more notification systems 118 associated with the dynamic system 102, other types of devices, or combinations thereof.

In FIG. 1, the transition state model 104 is depicted as being a part of the first computer system 108 and the second computer system 112. In some implementations, the transition state model 104 is a part of a stand-alone device that provides output to the first computer system 108, the second computer system 112, or both. Also, in FIG. 1, the first computer system 108, the second computer system 112, and the notification system 118 are depicted as separate components, but in some implementations, the functionality of two or more of these components can be combined. Likewise, the functionality of a control system 116 depicted in the second computer system 112 can be implemented in a stand-alone device. For example, the first computer system 108 can include the functionality of the second computer system 112 and provide output to the stand-alone control system 116, to the notification system 118, or both; the second computer system 112 can include the functionality of the notification system 118 and provide control signals to an instance of the dynamic system 102 (e.g., a particular batch reactor for a dynamic system corresponding to batch reactors used to produce a particular product) based on data received from the database 106, data from sensors associated with the instance of the dynamic system 102, or both; etc.

The database 106 receives data from the dynamic system 102 and stores the data. The data includes particular data usable by the transition state model 104 to determine when the dynamic system 102 transitions from one state to another state. In an example in which the dynamic system 102 corresponds to aircraft flights, the data stored in the database 106 is ADS-B data that includes time information, flight information, velocity information, position information, other information, or combinations thereof. The first computer system 108, the second computer system 112, or both, use the transition state model 104 to process data from the database 106 to identify a first particular flight and a first flight phase associated with the first particular flight at a particular time, stores information associated with the first particular flight as stored information, and determines if the flight phase changed based on a comparison of the first flight phase with the flight phase determined from the next entry for the flight in the stored information. When the comparison indicates that the flight phase changed, the transition state model 104 outputs particular information including an identifier of the first particular flight, the particular time, and the first flight phase.

The first computer system 108 is configured to generate the transition confidence matrix 110. The first computer system 108 includes one or more processors 120 and a memory 122. The memory includes data 124 and instructions 126. The instructions 126 are executable by the processor 120 to perform one or more operations. The instructions 126 include particular instructions (e.g., scripts, programs, subroutines, applications, etc.) executable by the processor 120 and include a transition matrix generator 128 and the transition state model 104.

The first computer system 108, at a request of a user or at particular time intervals, is configured to execute the transition matrix generator 128 using the processor 120 to produce the transition confidence matrix 110. During use of the first computer system 108 to produce the transition confidence matrix 110, the first computer system 108 accesses the database 106 to retrieve a set of historical data for the dynamic system 102. The transition matrix generator 128 causes the set of historical data to be processed using the transition state model 104. Transition data for each transition detected by the transition state model 104 in the set of historical data is stored in a first dataset 130 (e.g., a dataframe) in the data 124 of the memory 122.

In some implementations, a second dataset 132 is generated based on the first dataset 130. The second dataset includes at least one entry from the first dataset 130 for each individual case identified in the set of historical data, and includes one entry for each type of state for the case. For example, if the set of historical data identifies a first case for a dynamic system 102 associated with 14 individual states, and the data from the transition state model 104 indicated that there were 1653 state changes for the first case associated with 11 of the individual types of states; there would be entries in the first dataset corresponding to the 1653 state transitions, and entries in the second dataset 132 would include 11 entries for the case, which would correspond to one entry for each of the 11 individual state types.

After generation of the second dataset 132, the content of the second dataset 132 is analyzed to identify first cases, based on one or more criterion, where a realistic representation of the possible states is found. The one or more criterion may include the presence of a start state and an end state, and may include one or more additional states. For example, when the dynamic system 102 is aircraft flights, each flight corresponds to a case, and for a flight to be realistic, the second dataset 132 needs to include entries corresponding to the start state of taxi out and the final state of taxi in, and the entries should also include take off, initial climb, approach, and landing. When the entries in the second dataset for a particular case (i.e., a particular flight) do not include each of the states of taxi out, take off, initial climb, approach, landing, and taxi in, the particular case is not identified as one of the first cases.

The first dataset 130 is inner joined with the second dataset 132 set to modify the first dataset 130 to a modified first dataset 130 that includes only the first cases that meet the one or more criterion (e.g., cases with a minimum number of realistic states). The modified first dataset 130 is processed to generate a first matrix. Entries in the first matrix correspond to confidence metrics of an indicated transition. According to an aspect, the first matrix is a square array having rows and columns. The rows and columns correspond to ordered lists of states for the dynamic system 102, with the columns indicating states detected by the transition state model 104, and the rows indicating a previous state to the state indicated in a column. Processing the modified first dataset 130 includes identifying the states indicated in the first dataset as final states and using a data processing function (e.g., a sql.lag function) to determine the previous state associated with each final state. Each of the previous states is identified as an initial state.

The first dataset 130 is processed to determine, for each type of state, a first sum of occurrences of the first cases of instances where the state is identified as the initial state. The first dataset is further processed to determine, for each initial state and final state pairing, a second sum for the first cases of occurrences of transitions from the initial state to the final state. Entries of the first matrix are generated for each initial state and final state pairing. The entry for a particular initial state and a particular final state is based on the second sum for the particular initial state and the particular final state divided by the first sum associated with the particular initial state. The division produces a fraction and the entries in a particular row add to one (or close to one due to rounding errors). The fraction can be converted to a percentage by multiplying the fraction by one hundred.

Information in the first matrix can be compared to information based on user experience associated with the dynamic system 102, based on expected transitions for the dynamic system 102, or both. The expected transitions can be presented as an expectation transition matrix, can be individual values for particular transitions from a first state to a second state, or combinations thereof. The comparison can be used to determine if the first matrix is usable (i.e., includes realistic values for most or all of the entries). When a determination is that the first matrix is usable, the first matrix can be used as the transition confidence matrix 110, or the first matrix can be modified to produce the transition confidence matrix 110. When the determination is that the first matrix is not usable, or that a better representation can be produced, the first matrix or particular entries in the first matrix can be used as a basis for updating the transition state model 104, or having the transition state model 104 updated, to more accurately indicate transitions of the dynamic system 102. For example, as discussed above, information can be provided to an entity associated with the transition state model 104 to request that parameters used by the transition state model 104 to determine that an aircraft state is in the initial climb state (e.g., altitude thresholds and velocity thresholds) be modified to reduce or eliminate the occurrences that indicate a transition from cruise to initial climb. If an updated transition state model 104 is provided and put into service, the transition confidence matrix 110 is updated so that the transition confidence matrix 110 is based on the transition state model 104 being used to detect state transitions.

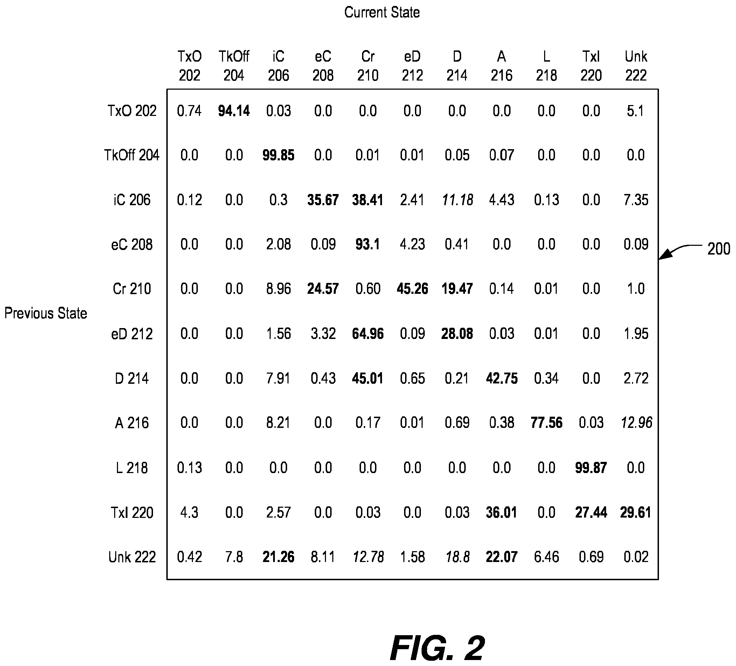

FIG. 2 depicts a first matrix 200 generated by the first computer system 108 for flight systems for a particular time frame based on historical data from the database 106 with the entries expressed as percentages. Entries with values over 20% are depicted in bold, entries with values from 10% to 20% are italicized, and entries with values less than 10% are shown in normal text to facilitate visualization of presented information. The row title (i.e., Previous State), the column title (i.e., Current State), and the state indicators 202-222) presented in association with the matrices 200, 300, and 110 of FIGS. 2-4 are similarly provided to facilitate visualization of presented information and are not part of the matrices 200, 300, and 110.

The number of flights that satisfied the one or more criterion used in generation of the modified first dataset 130 used to produce the first matrix 200 is over 175,000 flights, and the historical data used to generate the first matrix 200 is based on ADS-B data from May 2022 to July 2022. The first matrix 200 includes states of taxi out (TxO) 202, take off (TkOff) 204, initial climb (iC) 206, enroute climb (eC) 208, cruise (Cr) 210, enroute descent (eD) 212, descent (D) 214, approach (A) 216, landing (L) 218, taxi in (TxI) 220, and unknown (Unk) 222. The unknown entries 222 correspond to times where ADS-B data from the database 106 was missing or obviously erroneous (e.g., position data indicates that the aircraft is in the earth). ADS-B data for a flight can be missing due to a location of an aircraft being outside of a range of detectors that monitor ADS-B data (e.g., the aircraft is located over an ocean hundreds of miles from a nearest fixed position ADS-B detector that provides data to the database 106) and due to incomplete reception by a detector of an ADS-B message, other causes, or combinations thereof. ADS-B data from the database 106 can be obviously erroneous due to interference, corruption, or other causes.

FIG. 3 depicts a transition matrix 300 for the flight systems of FIG. 2. The entries with shading depict transitions that are expected to occur during an aircraft flight based on user experience. A comparison of the matrix 200 of FIG. 2 with the transition matrix 300 of FIG. 3 shows that the matrix 200 is in fairly good agreement with the transition matrix 300. The comparison shows that the matrix 200 and the transition matrix 300 predict the same behavior for taxi out, take off, cruise, approach, and landing, and have only minor differences with respect to initial climb, enroute climb, and enroute descent. A taxi in state change to any other state does not occur since the taxi in state is the last state for a flight. Although the data as presented in the second to last row of the transition confidence matrix 200 appears problematic due to relatively high percentage values for transitions that should not occur, this is because these values represent percentages of the total number of times that a transition from taxi in to another state is detected. In the data used to generate these values, the total number of times that a transition from taxi in to another state occurred is low (i.e., approximately 3000 occurrences), which is a small number in comparison to the large total number of flights used to generate the transition confidence matrix (i.e., over 175,000). Thus, the number of occurrences of transitions to another state from taxi in can be statistically insignificant.

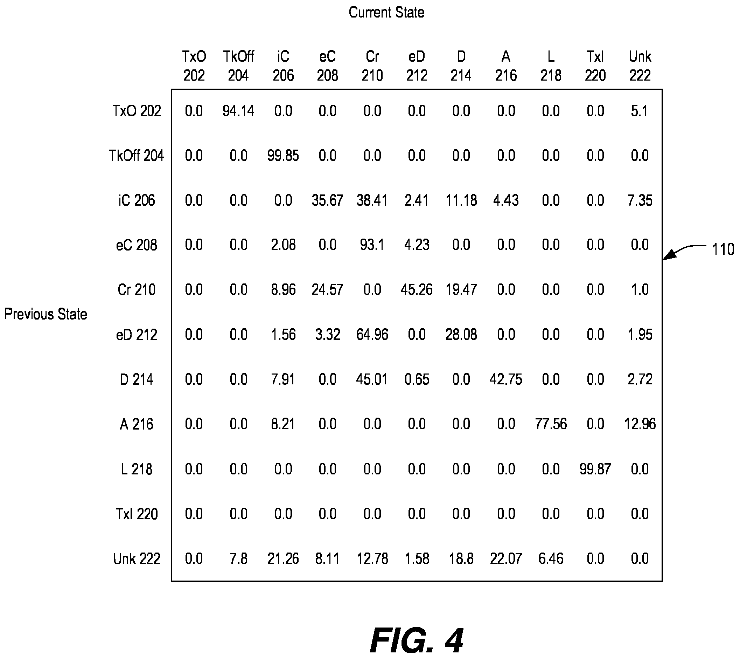

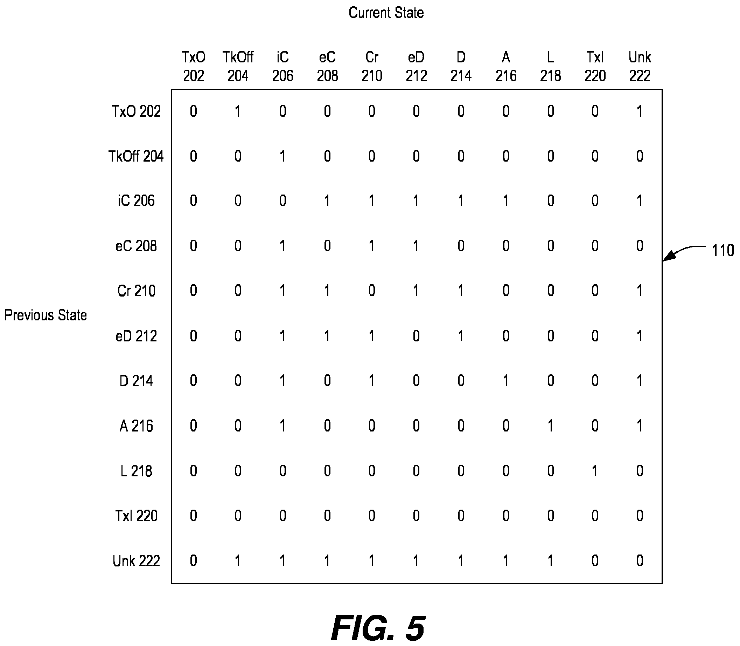

In some implementations, the matrix 200 is used as the transition confidence matrix 110. In other embodiments, the matrix 200 is modified to a second matrix and the second matrix is used as the transition confidence matrix 110. The modifications may be based on known limitations for the dynamic system 102 (e.g., the state of taxi in 220 does not change to another state for the dynamic system 102 of aircraft flights), based on zeroing statistically insignificant entries of the matrix 200 (e.g., entries corresponding to less than 1% or some other probability of occurring), based on other considerations, or combinations thereof. In some implementations, the matrix 200 or the second matrix can be modified to a matrix of ones for entries that are not zero or are greater than a confidence threshold (e.g., 1%, 0.5%, or some other value) and zeros for entries that are zero or at or below the confidence threshold. The resulting matrix is used as the transition confidence matrix 110. FIG. 4 depicts a first implementation of the transition confidence matrix 110 generated by modifying the matrix 200 to have zero values for the taxi in row and to have zero values for entries that are less than 1% in the matrix 200. FIG. 5 depicts a second implementation of the transition confidence matrix 110 generated by transforming the transition confidence matrix 110 of FIG. 4 to a matrix with entries of logical values of zero or one.

Returning to FIG. 1, the transition confidence matrix 110 (e.g., the transition confidence matrix 110 of FIG. 4 or the transition confidence matrix 110 of FIG. 5, as illustrative examples) produced by the first computer system 108 can be provided to the second computer system 112. The transition confidence matrix 110 is used by the second computer system 112 to determine if a detected transition by the transition state model, based on real time data, or near real time data, from the database 106 or sensors that monitor an instance of the dynamic system 102, are valid.

The second computer system 112 includes one or more processors 134 and a memory 136. The memory 136 includes data 138 and instructions 140. The instructions 140 are executable by the processor 134 to perform one or more operations. The instructions 140 include particular instructions (e.g., scripts, programs, subroutines, applications, etc.) executable by the processor 134. The particular instructions depicted in FIG. 1 include the transition confidence monitor 114, the transition state model 104, and the control system 116.

The first computer system 108 is configured to execute the transition confidence monitor 114 using the processor 134 to produce output that indicates a particular state when the transition confidence monitor 114 determines that the transition to the particular state is valid. When the transition confidence monitor 114 is initiated, the transition confidence monitor 114 initiates use of the transition state model 104 to determine state transitions based on real time data, or near real time data, from the database 106 or from sensors that monitor an instance of the dynamic system 102. When the transition state model 104 provides input that indicates a transition of the dynamic system 102 for a case, the transition confidence monitor 114 retrieves a previous state for the case (which is set to "unknown" when the input is first received input for the case) and retrieves a confidence metric for the transition by accessing an entry in the transition confidence matrix 110 corresponding to the previous state and the current state as indicated by the input.

When the confidence value is not zero, a valid transition from a previous state to the state provided by the transition state monitor 104 is indicated. The transition confidence monitor 114 saves the state indicated by the transition as the previous state and generates output data including the state indicated by the transition. The output data is provided as input to another device (e.g., the notification system 118), as input for other instructions that the processor 134 is executing (e.g., the control system 116), or both.

When the confidence value is zero, the transition to the state provided by the transition state monitor 104 is an invalid transition and the transition confidence monitor 114 does not provide output indicating the state provided by the transition state monitor 104. In some implementations when the confidence value is zero, the transition confidence monitor 114 waits for additional output from the transition state model 104 without provision of output data. When no additional output from the transition state model 104 is received before passage of a threshold amount of time, the state indicated by the transition is sent as output data from the transition confidence monitor 114.

Output of the transition confidence monitor 114 can be provided to the notification system 118. In some implementations, the notification system 118, based on receipt of output from the transition confidence monitor 114, generates updated information associated with an instance of the dynamic system and provides the updated information to one or more display devices. For example, the notification system 118 can receive output of the transition confidence monitor 114 that indicates a transition to the taxi in phase for an aircraft associated with a particular flight at an airport. Based on the indication of the transition to the taxi in phase, the notification system 118 may access an average time for aircraft taxiing in after landing at the airport and calculate an estimate of stand (e.g., gate) arrival time for the aircraft. The notification system 118 can create updated information for the flight and present the updated information as part of information presented via arrival/departure monitors at the airport.

The control system 116 includes models of the states of the dynamic system 102 (e.g., instructions executable by the processor 134 to emulate the states of the dynamic system). The control system 116, in response to receipt of output from the transition confidence monitor 114, uses the state indicated in the output as a current state of the dynamic system 102. The control system 116 is configured to use a model corresponding to the current state to emulate the current state and generate one or more control signals to send to one or more controllers of the dynamic system 102 to influence one or more conditions of an instance of the dynamic system 102 (e.g., a flight in a vicinity of a particular airport).

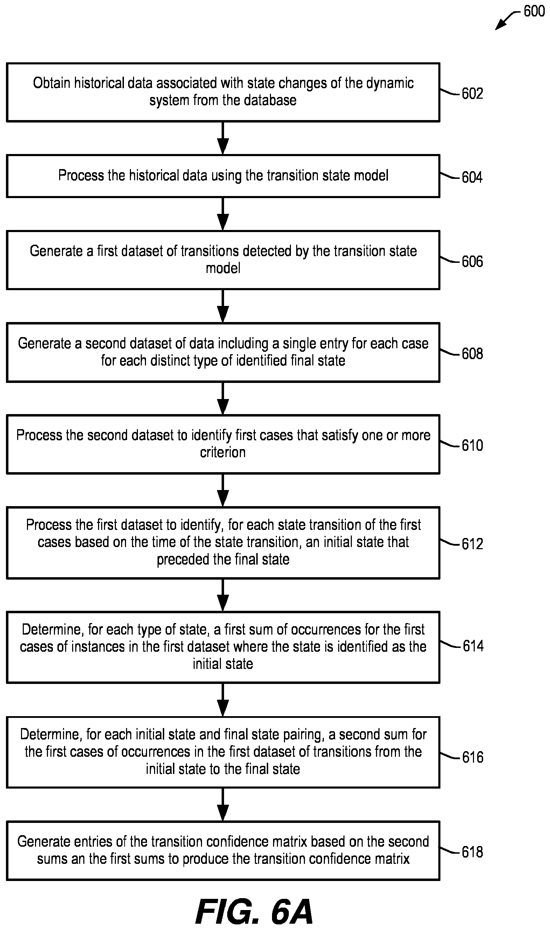

FIG. 6A is a flow chart of a first portion of a method 600 of generating a transition confidence matrix 110 for a dynamic system 102. In an implementation, the method 600 is performed by the first computer system 108 of FIG. 1. The method 600, at block 602, includes obtaining historical data associated with state changes of the dynamic system 102 from the database 106.

The method 600, at block 604, includes processing the historical data using the transition state model 104. The method 600, at block 606, includes generating a first dataset 130 of transitions detected by the transition state model 104. The first dataset 130 includes, for each state transition that was detected by the transition state model 104 for the historical data: an identifier of a case of the dynamic system 102 that experienced a state transition, a time of the state transition, and a final state associated with the state transition. The method 600, at block 608, includes generating a second dataset 132 of data including a single entry for each case for each distinct type of identified final state.

The method 600, at block 610, includes processing the second dataset 132 to identify first cases that satisfy one or more criterion. The one or more criterion includes the presence of one or more particular states in the second dataset 132 for a case. For example, for some dynamic systems 102, the one or more criterion require that the states for a particular case in the second dataset 132 include a first state (e.g., landing for the dynamic system 102 of aircraft flights). Additional criterion of the one or more criterion may require that the states for the particular case in the second dataset 132 include one or more additional states (e.g., take off and taxi in for the dynamic system 102 of aircraft flights).

The method 600, at block 612, includes processing the first dataset 130 to identify, for each state transition of the first cases based on the time of the state transition, an initial state that preceded the final state. The method 600, at block 614, includes determining, for each type of state, a first sum for the first cases of instances in the first dataset 130 where the state is identified as the initial state. The method also includes, at block 616, determining, for each initial state and final state pairing, a second sum for the first cases of occurrences in the first dataset 130 of transitions from the initial state to the final state.

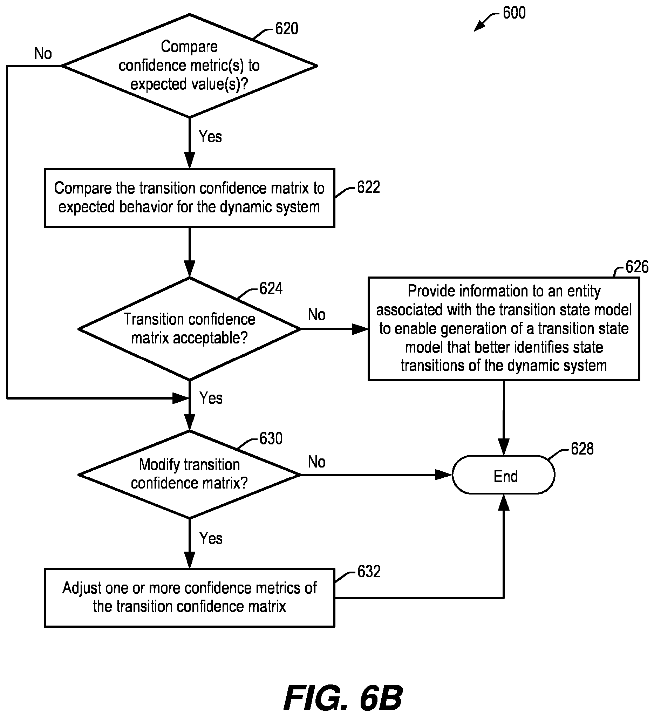

The method 600, at block 618, includes generating entries of the transition confidence matrix 110. An entry associated with a particular initial state and a particular final state is based on the second sum for the particular initial state and the particular final state divided by the first sum associated with the particular initial state. In some implementations, the method 600 ends after block 618. In other implementations, the method optionally continues as depicted in FIG. 6B.

FIG. 6B is a flowchart of a second portion of the method 600 of generating the transition confidence matrix 110 for the dynamic system 102. In some implementations, the method 600 continues from block 618 of FIG. 6A. The method 600, at decision block 620, includes determining whether to compare one or more confidence metrics of the transition confidence matrix 110 to one or more expected confidence metrics. When the determination at decision block 620 is to compare the one or more confidence metrics, the method 600, at block 622, includes comparing the one or more confidence metrics of the transition confidence matrix 110 to one or more expected confidence metrics. The one or more expected confidence metrics are based on user experience with the dynamic system 102 and include indications of state transitions that are expected to occur or are known to occur, indications of state transitions that are not expected to occur or are known to not occur, or combinations thereof. The method 600 continues at decision block 624. When the determination at decision block 620 is not to compare the one or more confidence metrics, the method 600 continues at decision block 630.

The method 600, at decision block 624, includes determining whether the transition confidence matrix 110 is acceptable. In some implementations, the determination is based on the confidence metrics agreeing, or substantially agreeing, with the expected confidence metrics without having a large numbers of confidence metrics that would incorrectly indicate invalid state transitions. When the decision at decision block 624 is that the transition confidence matrix 110 is not acceptable, the method 600, at block 626, includes providing information to an entity associated with the transition state model 104 to enable generation of a transition state model 104 that better identifies state transitions of the dynamic system 102. The method 600 ends at block 628.

When the determination at decision block 624 is that the transition confidence matrix 110 is acceptable or the determination at decision block 620 is not to compare the one or more confidence metrics to the one or more expected values, the method 600, at decision block 630, includes determining whether to modify the transition confidence matrix 110. The determination may be based on a desire to change one or more transition confidence metrics that are known to be incorrect to correct values, to change values less than a threshold value to zero, to transform the transition confidence matrix 110 to a matrix that only includes ones and zeros, or combinations thereof. When the decision at decision block 630 is not to modify the transition confidence matrix 110, the method 600 ends at block 628. When the decision at decision block 630 is to modify the transition confidence matrix 110, the method 600, at block 632, includes adjusting one or more of the confidence metrics of the transition confidence matrix 110. The method 600 then ends at block 628.

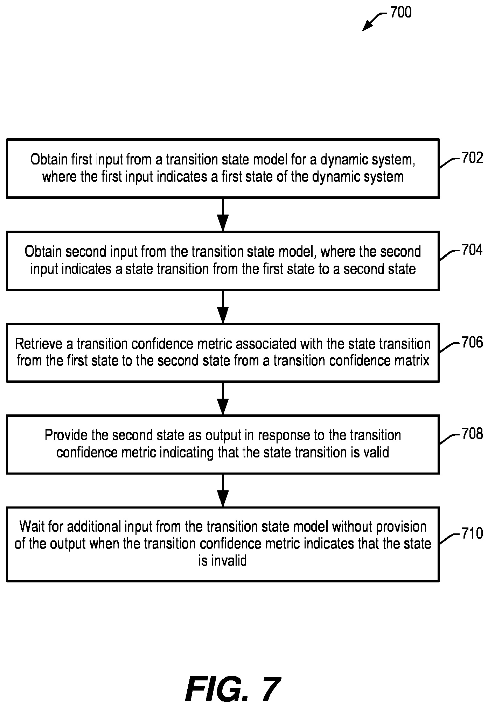

FIG. 7 is a flow chart of a method 700 of use of a transition confidence matrix 110 to provide confidence information associated with detected state transitions for a dynamic system. In some implementations, the method 700 is performed by the second computer system 112 of FIG. 1 using the transition confidence monitor 114. The method 700, at block 702, includes obtaining first input from the transition state model 104 for the dynamic system 102. The first input indicates a first state of the dynamic system 102. The method 700, at block 704, also includes obtaining second input from the transition state model 104. The second input indicates a state transition from the first state to a second state.

The method 700, at block 706, includes retrieving a transition confidence metric associated with the state transition from the first state to the second state from a transition confidence matrix 110. In some implementations, the transition confidence matrix 110 is downloaded to the second computer system 112. In some implementations, the second computer system 112 is configured to generate the transition confidence matrix 110.

The method 700, at block 708, includes providing the second state as output in response to the transition confidence metric indicating that the state transition is valid. Confidence metrics in the transition confidence matrix 110 that are greater than zero indicate valid transitions.

The method 700, at block 710, also includes waiting for additional input from the transition state model 104 without provision of the output when the transition confidence metric indicates that the state transition is invalid. Confidence metrics in the transition confidence matrix 110 that are zero indicate invalid transitions.

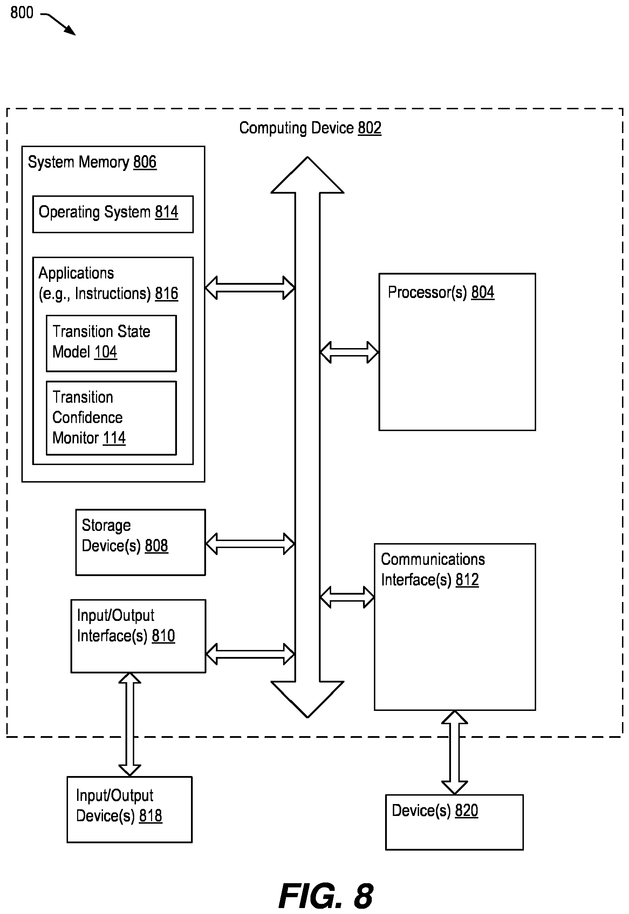

FIG. 8 is an illustration of a block diagram of a computing environment 800 including a computing device 802 configured to support implementations of computer-implemented methods and computer-executable program instructions (or code) according to the present disclosure. For example, the computing device 802, or portions thereof, may execute instructions to perform, or cause equipment to perform, operations described with reference to FIGS. 1-7. In implementations, computing devices 802 are, or are components of, the dynamic system 102, the database 106, the first computer system 108, the second computer system 112, and the notification system 118 of FIG. 1.

The computing device 802 includes one or more processors 804. The processor 804 communicates with a system memory 806, one or more storage devices 808, one or more input/output interfaces 810, one or more communications interfaces 812, or a combination thereof. The system memory 806 includes non-transitory computer-readable media, including volatile memory devices (e.g., random access memory (RAM) devices), nonvolatile memory devices (e.g., read-only memory (ROM) devices, programmable read-only memory, and flash memory), or both. The system memory 806 includes an operating system 814, which may include a basic input/output system for booting the computing device 802 as well as a full operating system to enable the computing device 802 to interact with users, other programs, and other devices. The system memory 806 includes one or more applications 816 (e.g., instructions) which are executable by the processor 804. For example, when the computing device 802 is the first computer system 108, the one or more applications 816 include the transition state model 104 and the transition matrix generator 128; and when the computing device 802 is the second computer system 112, the one or more applications 816 include the transition state model 104, the transition confidence monitor 114, and the control system 116.

In some configurations, the processor 804 communicates with the one or more storage devices 808. For example, the storage device 808 includes non-transitory computer-readable media that can include nonvolatile storage devices, such as magnetic disks, optical disks, or flash memory devices. The storage devices 808 can include both removable and non-removable memory devices. The storage devices 808 can be configured to store an operating system, images of operating systems, applications, and program data. In particular implementations, the system memory 806, the storage device 808, or both, include tangible computer-readable media incorporated in hardware and which are not signals.

In some configurations, the processor 804 communicates with the one or more input/output interfaces 810 that enable the computing device 802 to communicate with one or more input/output devices 818 to facilitate user interaction. The input/output interfaces 810 can include serial interfaces (e.g., universal serial bus (USB) interfaces or Institute of Electrical and Electronics Engineers (IEEE) interfaces), parallel interfaces, display adapters, audio adapters, and other interfaces ("IEEE" is a registered trademark of The Institute of Electrical and Electronics Engineers, Inc. of Piscataway, New Jersey). The input/output devices 818 can include keyboards, pointing devices, displays (e.g., one or more monitors, one or more gauges, etc.), speakers, microphones, touch screens, rotatable selectors, levers, knobs, slides, switches, and other devices. The processor 804 detects interaction events based on user input received via the input/output interfaces 810. Additionally, the processor 804 sends a display to a display device via the input/output interfaces 810.

In some configurations, the processor 804 can communicate with one or more devices 820 via the one or more communications interfaces 812. The one or more devices 820 can include external computing devices contacted via a communication network and controllers, sensors, and other devices coupled to the computing device 802 via wired or wireless local connections. For example, when the computing device 802 is the second computer system 112, the computing device 802 is configured to communicate via the interface 812 with the database 106, the dynamic system 102, the notification system 118, or combinations thereof. The one or more communications interfaces 812 may include wired Ethernet interfaces, IEEE 802 wireless interfaces, other wireless communication interfaces, one or more converters to convert analog signals to digital signals, electrical signals to optical signals, one or more converters to convert received optical signals to electrical signals, or other network interfaces.

In some implementations, a non-transitory computer-readable medium stores instructions that, when executed by one or more processors, cause the one or more processors to initiate, perform, or control operations to perform part or all of the functionality described above. For example, the instructions may be executable to implement one or more of the operations or methods of FIGS. 1-7. In some implementations, part or all of one or more of the operations or methods associated with FIGS. 1-7 may be implemented by one or more processors (e.g., one or more central processing units (CPUs), one or more graphics processing units (GPUs), one or more digital signal processors (DSPs)) executing instructions, by dedicated hardware circuitry, or any combination thereof.

The scope of protection is defined by the independent claims.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims.

## Claims

1. A system comprising:
one or more processors, a control system; and
a memory comprising instructions executable by the one or more processors to:
obtain first input from a transition state model, wherein the first input indicates a first state of a dynamic system, the dynamic system corresponds to an aircraft flight and the first state including taxi out, take off, initial climb, enroute climb, cruise, enroute descent, descent, approach, landing, and taxi in;
obtain second input from the transition state model, wherein the second input indicates a state transition from the first state to a second state the second state including taxi out, take off, initial climb, enroute climb, cruise, enroute descent, descent, approach, landing, and taxi in;
retrieve a transition confidence metric associated with the state transition from a transition confidence matrix for the dynamic system based on the first state and the second state;
provide the second state as output when the transition confidence metric indicates that the state transition is valid; and
use the output, by the control system, to control an instance of the dynamic system.

2. The system of claim 1, wherein the instructions are further executable by the one or more processors to wait for additional input from the transition state model without provision of the output when the transition confidence metric indicates that the state transition is invalid.

3. The system of any of claims 1 or 2, wherein the control system generates one or more control signals for an instance of the dynamic system based on a model of the second state used in response to receipt by the control system of the output, and wherein one or more controllers associated with the instance of the dynamic system implement the one or more control signals.

4. The system of any of claims 1 to 3, further comprising a notification system, wherein the notification system generates updated information associated with an instance of the dynamic system based on receipt of the output and provides the updated information to one or more output devices.

5. A computer-implemented method comprising:
obtaining, at a first device, first input from a transition state model for a dynamic system, wherein the first input indicates a first state of the dynamic system; the dynamic system corresponds to an aircraft flight and the first state including taxi out, take off, initial climb, enroute climb, cruise, enroute descent, descent, approach, landing, and taxi in;
obtaining, at the first device, second input from the transition state model, wherein the second input indicates a state transition from the first state to a second state; the second state including taxi out, take off, initial climb, enroute climb, cruise, enroute descent, descent, approach, landing, and taxi in;
retrieving, at the first device, a transition confidence metric associated with the state transition from the first state to the second state from a transition confidence matrix;
providing, via the first device, the second state as output in response to the transition confidence metric indicating that the state transition is valid;
obtaining at a control system the second state as output; and
using the output by the control system to control an instance of the dynamic system.

6. The method of claim 5, wherein the output is provided to a control system configured to generate control signals based on a model of the second state, and wherein the control system is configured to send the control signals to one or more controllers to control an instance of the dynamic system.

7. The method of claim 5 or claim 6, wherein the output is provided to a notification system configured to generate updated information associated with an instance of the dynamic system based on the output, and wherein the notification system is configured to provide the updated information to one or more output devices.

8. The method of any of claims 5 to 7, wherein the first device or a second device is configured to generate the transition confidence matrix, and wherein generating the transition confidence matrix includes:
generating a first dataset of transitions for the dynamic system based on historical data that includes, for each state transition that was detected by the transition state model for the historical data: an identifier of a case of the dynamic system that experienced a state transition, a time of the state transition, and a final state associated with the state transition;
generating a second dataset of data including a single entry for each case for each distinct type of identified final state;
processing the second dataset to identify first cases that satisfy one or more criterion;
processing the first dataset to identify, for each state transition of the first cases and based on the time of the state transition, an initial state associated with the state transition that preceded the final state;
determining, for each type of state, a first sum of occurrences of the first cases in the first dataset where the state is identified as the initial state;
determining, for each initial state and final state pairing, a second sum of occurrences of transitions from the initial state to the final state in the first dataset for the first cases; and
generating entries of the transition confidence matrix, wherein an entry associated with a particular initial state and a particular final state is based on the second sum for the particular initial state and the particular final state divided by the first sum associated with the particular initial state.

9. The method of claim 8, further comprising setting each entry of the transition confidence matrix that is less than a confidence threshold to zero.

10. The method of claim 8 or claim 9, further comprising setting each entry of the transition confidence matrix that is greater than a confidence threshold to one.

11. The method of any of claims 8 to 10, further comprising changing one or more entries to zero for entries associated with transitions that are known to not occur.

12. The method of any of claims 8 to 11, further comprising comparing the transition confidence matrix to one or more expected transitions for the dynamic system.

13. The method of claim 12, further comprising changing one or more entries in the transition confidence matrix based on said comparing the transition confidence matrix to the one or more expected transitions for the dynamic system.

14. The method of claim 12 or claim 13, further comprising causing the transition state model to be updated based on said comparing the transition confidence matrix to the one or more expected transitions for the dynamic system.

15. The method of any of claims 8 to 14, wherein the one or more criterion include presence of a start state and an end state.

## Patentansprüche

1. Ein System umfassend:
einen oder mehrere Prozessoren, ein Steuersystem; und
einen Speicher, der Anweisungen umfasst, die von dem einen oder den mehreren Prozessoren ausgeführt werden können, um:
eine erste Eingabe von einem Übergangszustandsmodell zu erhalten, wobei die erste Eingabe einen ersten Zustand eines dynamischen Systems angibt, das dynamische System einem Luftfahrzeugflug entspricht und der erste Zustand das Ausrollen, den Start, den anfänglichen Steigflug, den Steigflug auf der Strecke, den Reiseflug, den Sinkflug auf der Strecke, den Sinkflug, den Anflug, die Landung und das Einrollen umfasst;
eine zweite Eingabe von dem Übergangszustandsmodell zu erhalten, wobei die zweite Eingabe einen Zustandsübergang von dem ersten Zustand zu einem zweiten Zustand angibt, wobei der zweite Zustand das Ausrollen, den Start, den anfänglichen Steigflug, den Steigflug auf der Strecke, den Reiseflug, den Sinkflug auf der Strecke, den Sinkflug, den Anflug, die Landung und das Einrollen umfasst;
eine Übergangsvertrauensmetrik, die dem Zustandsübergang zugeordnet ist, von einer Übergangsvertrauensmatrix für das dynamische System auf Grundlage des ersten Zustands und des zweiten Zustands abzurufen;
den zweiten Zustand als Ausgabe bereitzustellen, wenn die Übergangsvertrauensmetrik angibt, dass der Zustandsübergang gültig ist; und
die Ausgabe durch das Steuersystem zu verwenden, um eine Instanz des dynamischen Systems zu steuern.

2. Das System von Anspruch 1, wobei die Anweisungen ferner durch den einen oder die mehreren Prozessoren ausgeführt werden können, um auf eine zusätzliche Eingabe von dem Übergangszustandsmodell ohne Bereitstellung der Ausgabe zu warten, wenn die Übergangsvertrauensmetrik angibt, dass der Zustandsübergang ungültig ist.

3. Das System von einem der Ansprüche 1 oder 2, wobei das Steuersystem ein oder mehrere Steuersignale für eine Instanz des dynamischen Systems auf Grundlage eines Modells des zweiten Zustands erzeugt, das als Reaktion auf den Empfang der Ausgabe durch das Steuersystem verwendet wird, und wobei eine oder mehrere Steuerungen, die der Instanz des dynamischen Systems zugeordnet sind, das eine oder die mehreren Steuersignale implementieren.

4. Das System von einem der Ansprüche 1 bis 3, ferner umfassend ein Benachrichtigungssystem, wobei das Benachrichtigungssystem aktualisierte Informationen, die einer Instanz des dynamischen Systems zugeordnet sind, auf Grundlage des Empfangs der Ausgabe erzeugt und die aktualisierten Informationen einer oder mehreren Ausgabevorrichtungen bereitstellt.

5. Ein Computerimplementiertes Verfahren, umfassend:
erhalten einer ersten Eingabe von einem Übergangszustandsmodell für ein dynamisches System an einer ersten Vorrichtung, wobei die erste Eingabe einen ersten Zustand des dynamischen Systems angibt; das dynamische System einem Luftfahrzeugflug entspricht und der erste Zustand das Ausrollen, den Start, den anfänglichen Steigflug, den Steigflug auf der Strecke, den Reiseflug, den Sinkflug auf der Strecke, den Sinkflug, den Anflug, die Landung und das Einrollen umfasst;
erhalten einer zweiten Eingabe von dem Übergangszustandsmodell an der ersten Vorrichtung, wobei die zweite Eingabe einen Zustandsübergang von dem ersten Zustand zu einem zweiten Zustand angibt; wobei der zweite Zustand das Ausrollen, den Start, den anfänglichen Steigflug, den Steigflug auf der Strecke, den Reiseflug, den Sinkflug auf der Strecke, den Sinkflug, den Anflug, die Landung und das Einrollen umfasst;
abrufen einer Übergangskonfidenzmetrik, die dem Zustandsübergang von dem ersten Zustand zu dem zweiten Zustand zugeordnet ist, an der ersten Vorrichtung aus einer Übergangskonfidenzmatrix;
bereitstellen, über die erste Vorrichtung, des zweiten Zustands als Ausgabe als Reaktion auf die Übergangsvertrauensmetrik, die angibt, dass der Zustandsübergang gültig ist;
erhalten des zweiten Zustands als Ausgabe an einem Steuersystem; und
verwenden der Ausgabe durch das Steuersystem, um eine Instanz des dynamischen Systems zu steuern.

6. Das Verfahren von Anspruch 5, wobei die Ausgabe einem Steuersystem bereitgestellt wird, das dazu konfiguriert ist, Steuersignale auf Grundlage eines Modells des zweiten Zustands zu erzeugen, und wobei das Steuersystem dazu konfiguriert ist, die Steuersignale an eine oder mehrere Steuerungen zu senden, um eine Instanz des dynamischen Systems zu steuern.

7. Das Verfahren von Anspruch 5 oder Anspruch 6, wobei die Ausgabe einem Benachrichtigungssystem bereitgestellt wird, das dazu konfiguriert ist, aktualisierte Informationen, die einer Instanz des dynamischen Systems zugeordnet sind, auf Grundlage der Ausgabe zu erzeugen, und wobei das Benachrichtigungssystem dazu konfiguriert ist, die aktualisierten Informationen einer oder mehreren Ausgabevorrichtungen bereitzustellen.

8. Das Verfahren von einem der Ansprüche 5 bis 7, wobei die erste Vorrichtung oder eine zweite Vorrichtung dazu konfiguriert ist, die Übergangskonfidenzmatrix zu erzeugen, und wobei das Erzeugen der Übergangskonfidenzmatrix Folgendes umfasst:
erzeugen eines ersten Datensatzes von Übergängen für das dynamische System auf Grundlage historischer Daten, der für jeden Zustandsübergang, der durch das Übergangszustandsmodell für die historischen Daten erkannt wurde, Folgendes umfasst: eine Kennung eines Falls des dynamischen Systems, bei dem ein Zustandsübergang stattgefunden hat, einen Zeitpunkt des Zustandsübergangs und einen dem Zustandsübergang zugeordneten Endzustand;
erzeugen eines zweiten Datensatzes von Daten, der einen einzelnen Eintrag für jeden Fall für jede unterschiedliche Art eines identifizierten Endzustands enthält;
verarbeiten des zweiten Datensatzes, um erste Fälle zu identifizieren, die ein oder mehrere Kriterien erfüllen;
verarbeiten des ersten Datensatzes, um für jeden Zustandsübergang der ersten Fälle und auf Grundlage des Zeitpunkts des Zustandsübergangs einen Anfangszustand zu identifizieren, der dem Zustandsübergang zugeordnet ist, der dem Endzustand vorausging;
ermitteln einer ersten Summe der Vorkommen der ersten Fälle im ersten Datensatz, bei denen der Zustand als der Anfangszustand identifiziert wurde, für jeden Zustandstyp;
ermitteln einer zweiten Summe der Vorkommen von Übergängen vom Anfangszustand zum Endzustand im ersten Datensatz für die ersten Fälle für jedes Paar aus Anfangszustand und Endzustand; und
erzeugen von Einträgen der Übergangskonfidenzmatrix, wobei ein Eintrag, der einem bestimmten Anfangszustand und einem bestimmten Endzustand zugeordnet ist, auf der zweiten Summe für den bestimmten Anfangszustand und den bestimmten Endzustand, geteilt durch die erste Summe, die dem bestimmten Anfangszustand zugeordnet ist, basiert.

9. Das Verfahren von Anspruch 8, ferner umfassend das Einstellen jedes Eintrags der Übergangskonfidenzmatrix, der kleiner als ein Konfidenzschwellenwert ist, auf null.

10. Das Verfahren von Anspruch 8 oder Anspruch 9, ferner umfassend das Einstellen jedes Eintrags der Übergangskonfidenzmatrix, der größer als ein Konfidenzschwellenwert ist, auf eins.

11. Das Verfahren von einem der Ansprüche 8 bis 10, ferner umfassend das Ändern eines oder mehrerer Einträge auf null für Einträge, die Übergängen zugeordnet sind, von denen bekannt ist, dass sie nicht auftreten.

12. Das Verfahren von einem der Ansprüche 8 bis 11, ferner umfassend das Vergleichen der Übergangskonfidenzmatrix mit einem oder mehreren erwarteten Übergängen für das dynamische System.

13. Das Verfahren von Anspruch 12, ferner umfassend das Ändern eines oder mehrerer Einträge in der Übergangskonfidenzmatrix auf Grundlage des Vergleichs der Übergangskonfidenzmatrix mit dem einen oder den mehreren erwarteten Übergängen für das dynamische System.

14. Das Verfahren von Anspruch 12 oder Anspruch 13, ferner umfassend das Veranlassen einer Aktualisierung des Übergangszustandsmodells auf der Grundlage des Vergleichs der Übergangskonfidenzmatrix mit dem einen oder den mehreren erwarteten Übergängen für das dynamische System.

15. Das Verfahren von einem der Ansprüche 8 bis 14, wobei das eine oder die mehreren Kriterien das Vorhandensein eines Startzustands und eines Endzustands umfassen.

## Revendications

1. Un système comprenant :
un ou plusieurs processeurs, un système de commande ; et
une mémoire comprenant des instructions pouvant être exécutées par le un ou les plusieurs processeurs pour :
obtenir une première entrée à partir d'un modèle d'état de transition, dans lequel la première entrée indique un premier état d'un système dynamique, le système dynamique correspond à un vol d'aéronef et le premier état comprenant le roulage vers la piste de décollage, le décollage, la montée initiale, la montée en route, le vol de croisière, la descente en route, la descente, l'approche, l'atterrissage et le roulage vers le terminal ;
obtenir une deuxième entrée du modèle d'état de transition, dans lequel la deuxième entrée indique une transition d'état du premier état à un second état, le second état comprenant le roulage vers la piste de décollage, le décollage, la montée initiale, la montée en route, le vol de croisière, la descente en route, la descente, l'approche, l'atterrissage et le roulage vers le terminal ;
récupérer une mesure de confiance de transition associée à la transition d'état à partir d'une matrice de confiance de transition pour le système dynamique, sur la base du premier état et du second état ;
fournir le second état en tant que sortie lorsque la mesure de confiance de transition indique que la transition d'état est valide ; et
utiliser la sortie, par le système de commande, pour commander une instance du système dynamique.

2. Le système de la revendication 1, dans lequel les instructions peuvent en outre être exécutées par le un ou les plusieurs processeurs pour attendre une entrée supplémentaire du modèle d'état de transition sans fournir la sortie lorsque la mesure de confiance de transition indique que la transition d'état est invalide.

3. Le système de l'une quelconque des revendications 1 ou 2, dans lequel le système de commande génère un ou plusieurs signaux de commande pour une instance du système dynamique sur la base d'un modèle du second état utilisé en réponse à la réception par le système de commande de la sortie, et dans lequel un ou plusieurs contrôleurs associés à l'instance du système dynamique mettent en œuvre le un ou les plusieurs signaux de commande.

4. Le système de l'une quelconque des revendications 1 à 3, comprenant en outre un système de notification, dans lequel le système de notification génère des informations mises à jour associées à une instance du système dynamique sur la base de la réception de la sortie et fournit les informations mises à jour à un ou plusieurs dispositifs de sortie.

5. Un procédé mis en œuvre par ordinateur comprenant :
obtenir, au niveau d'un premier dispositif, une première entrée à partir d'un modèle d'état de transition pour un système dynamique, dans lequel la première entrée indique un premier état du système dynamique ; le système dynamique correspond à un vol d'aéronef et le premier état comprenant le roulage vers la piste de décollage, le décollage, la montée initiale, la montée en route, le vol de croisière, la descente en route, la descente, l'approche, l'atterrissage et le roulage vers le terminal ;
obtenir, au niveau du premier dispositif, une deuxième entrée à partir du modèle d'état de transition, dans lequel la deuxième entrée indique une transition d'état du premier état à un deuxième état ; le second état comprenant le roulage vers la piste de décollage, le décollage, la montée initiale, la montée en route, le vol de croisière, la descente en route, la descente, l'approche, l'atterrissage et le roulage vers le terminal ;
récupérer, au niveau du premier dispositif, une mesure de confiance de transition associée à la transition d'état du premier état au second état à partir d'une matrice de confiance de transition ;
fournir, via le premier dispositif, le second état en tant que sortie en réponse à la mesure de confiance de transition indiquant que la transition d'état est valide ;
obtenir au niveau d'un système de commande le second état en tant que sortie ; et
utiliser la sortie du système de commande pour commander une instance du système dynamique.

6. Le procédé de la revendication 5, dans lequel la sortie est fournie à un système de commande configuré pour générer des signaux de commande sur la base d'un modèle du second état, et dans lequel le système de commande est configuré pour envoyer les signaux de commande à un ou plusieurs contrôleurs afin de commander une instance du système dynamique.

7. Le procédé de la revendication 5 ou la revendication 6, dans lequel la sortie est fournie à un système de notification configuré pour générer des informations mises à jour associées à une instance du système dynamique sur la base de la sortie, et dans lequel le système de notification est configuré pour fournir les informations mises à jour à un ou plusieurs dispositifs de sortie.

8. Le procédé de l'une quelconque des revendications 5 à 7, dans lequel le premier dispositif ou un second dispositif est configuré pour générer la matrice de confiance de transition, et dans lequel générer la matrice de confiance de transition comprend :
générer un premier ensemble de données de transitions pour le système dynamique sur la base de données historiques qui comprend, pour chaque transition d'état qui a été détectée par le modèle d'état de transition pour les données historiques : un identifiant d'un cas du système dynamique ayant subi une transition d'état, un moment de la transition d'état, et un état final associé à la transition d'état ;
générer un second ensemble de données comprenant une seule entrée pour chaque cas pour chaque type distinct d'état final identifié ;
traiter le deuxième ensemble de données pour identifier des premiers cas qui satisfont à un ou plusieurs critères ;
traiter le premier ensemble de données pour identifier, pour chaque transition d'état des premiers cas et sur la base du temps de la transition d'état, un état initial associé à la transition d'état qui a précédé l'état final ;
déterminer, pour chaque type d'état, une première somme d'occurrences des premiers cas dans le premier ensemble de données où l'état est identifié comme l'état initial ;
déterminer, pour chaque paire d'état initial et d'état final, une seconde somme des occurrences de transitions de l'état initial vers l'état final dans le premier ensemble de données pour les premiers cas ; et
générer des entrées de la matrice de confiance des transition, dans lequel une entrée associée à un état initial particulier et à un état final particulier est basée sur la seconde somme pour l'état initial particulier et l'état final particulier, divisée par la première somme associée à l'état initial particulier

9. Le procédé de la revendication 8, comprenant en outre la mise à zéro de chaque entrée de la matrice de confiance de transition qui est inférieur à un seuil de confiance.

10. Le procédé de la revendication 8 ou la revendication 9, comprenant en outre la mise à un de chaque entrée de la matrice de confiance de transition qui est supérieur à un seuil de confiance.

11. Le procédé de l'une quelconque des revendications 8 à 10, comprenant en outre la modification d'une ou plusieurs entrées à zéro pour les entrées associées à des transitions dont on sait qu'elles ne se produisent pas.

12. Le procédé de l'une quelconque des revendications 8 à 11, comprenant en outre la comparaison de la matrice de confiance de transition à une ou plusieurs transitions attendues pour le système dynamique.

13. Le procédé de la revendication 12, comprenant en outre la modification d'une ou plusieurs entrées dans la matrice de confiance de transition sur la base de ladite comparaison de la matrice de confiance de transition à la une ou aux plusieurs transitions attendues pour le système dynamique.

14. Le procédé de la revendication 12 ou la revendication 13, comprenant en outre amener le modèle d'état de transition à être mis à jour sur la base de ladite comparaison de la matrice de confiance de transition à la ou aux transitions attendues pour le système dynamique.

15. Le procédé de l'une quelconque des revendications 8 à 14, dans lequel le un ou les plusieurs critères comprennent la présence d'un état de début et d'un état de fin.
